# FASCICULE DE BREVET EUROPEEN

(11) **EP 0 993 598 B1**
(45) Date de publication et mention de la délivrance du brevet: **29.05.2002**
(21) Numéro de dépôt: 98935084.8
(22) Date de dépôt: 02.07.1998
(51) Int. Cl.: G01M 17/007, G01M 7/08

(54) **BANC PYROTECHNIQUE**
PYROTECHNISCHER PRÜFSTAND
PYROTECHNICAL TEST STAND

(30) Priorité: 03.07.1997 FR 9708630
(43) Date de publication de la demande: 19.04.2000
(73) Titulaire: Manufacture de Forage S.A., 42152 L'Horme (FR)
(72) Inventeur: Castagner, Bernard, F-77700 Coupvray (FR); Waitznegger, Claude, F-78590 Noisy-le-Roi (FR); Dufaut, Dominique, F-77450 Esbly (FR)
(74) Mandataire: Dupuis, François
(86) Numéro de dépôt international: FR9801417
(87) Numéro de publication internationale: WO9901735

(56) Documents cités:
- DE-C- 3 421 546
- DE-U- 8 533 101
- US-A- 2 810 288
- US-A- 3 823 600

## Description

Les effets mécaniques et physiologiques dus aux forces d'accélération ou de décélération, sur les personnes physiques ou sur des mécanismes embarqués dans des mobiles, font l'objet de recherches constantes, notamment dans les domaines de l'automobile et de l'aéronautique.

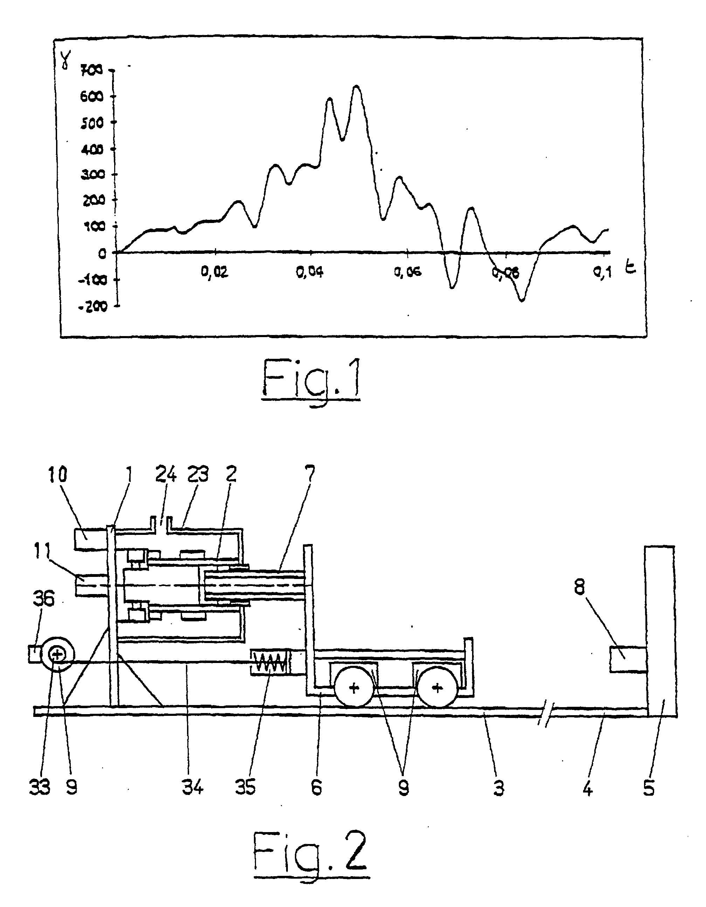

Ces lois d'accélération ou de décélération sont très complexes et très diverses - exemple fig. 1.

Pour effectuer ces travaux de recherche et de développement, on utilise :
- Soit des catapultes inverses dont les coûts d'investissement et d'utilisation sont très élevés, mais qui permettent de simuler avec une bonne précision les lois de décélération ou d'accélération (γ(t)).
- Soit des catapultes de lancement direct avec reproduction des lois γ(t) par écrasement d'éléments mécaniques en fin de course après mise en vitesse ; ce procédé est moins coûteux en terme d'investissement ou d'utilisation, mais ne permet que d'approcher les lois γ{t) et souvent uniquement par paliers croissants.

La présente invention permet de réaliser soit une accélération, soit une décélération, et ce à la fois en système direct ou en système inverse.

Dans le cas de la simulation d'une accélération, selon l'invention, l'accélération variable γ(t) induite sur l'équipement mobile expérimenté, est créée par une loi de pression P(t) appliquée sur un piston en appui sur l'équipement mobile ou lié à lui. Cette pression est créée dans le tube de lancement du piston par des gaz fournis par un ensemble de générateurs de gaz pyrotechniques à allumage séquentiel programmé.

Le tube de lancement comporte des évents réglables pour permettre les décroissances rapides de la loi de pression P(t) et donc de la loi d'accélération γ(t).

,Après la phase de simulation γ(t). le mobile est freiné mécaniquement.

On obtient la simulation d'une loi de décélération en inversant l'orientation des équipements et des passagers de 180°.

Selon l'invention, on crée aussi une loi de décélération, en lançant l'équipement mobile contre un piston qui se déplace dans un tube de lancement dans lequel on crée une loi de pression p(t), Cette pression lui est appliquée et induit sur l'équipement mobile la décélération γ(t) recherchée.

Comme dans le cas de la simulation d'accélération, le tube de lancement comporte des évents réglables pour permettre les décroissances rapides de la loi de pression P(t) et donc de la loi de décélération γ(t).

L'originalité de la conception et de la construction du dispositif banc pyrotechnique de réalisation d'accélération et de décélération à spectres simples ou complexes, dans les deux versions accélération et décélération, objet de l'invention, ressortira de la description ci-après. Cette description est illustratrice et non limitative.

La figure 2 représente une constitution préférentielle du dispositif, dans sa version accélération, qui permet aussi de simuler une décélération en inversant les équipements et les passagers sur l'équipement mobile.

Selon l'invention, le banc est constitué préférentiellement de :
- un bâti (1) équipé du dispositif de lancement (2)
- un chemin de roulement (3) préférentiellement réalisé à l'aide des deux rails (4).
- un butoir (5) placé à l'extrémité des deux rails (4) et équipé d'absorbeur d'énergie de sécurité (8).
- un chariot mobile (6) équipé d'une tête de poussée (7). Les équipements et les passagers, objets et sujets de l'expérimentation sont placés sur le chariot mobile (6).
- un dispositif de freinage (9)
- un équipement informatique (10) de simulation de fonctionnement du banc permettant de définir, grâce à un logiciel spécifique à l'invention, les réglages des évents d'évacuation des gaz, ainsi que les caractéristiques des générateurs de gaz pyrotechniques et leur séquence d'allumage.
- un séquenceur d'allumage (11)

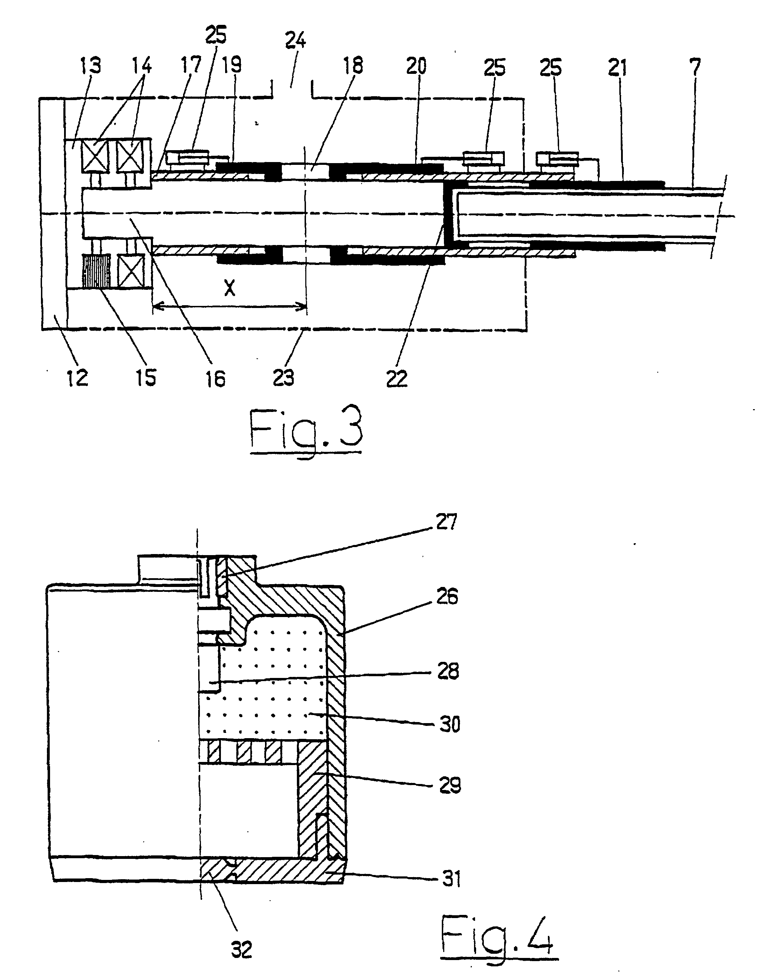

Selon l'invention, le dispositif de lancement (2) est préférentiellement constitué (fig.3) de :
- une platine de fixation (12)
- une culasse (13) comportant les logements (14) des générateurs de gaz pyrotechniques (15) et une chambre de détente initiale (16).
- un tube de lancement (17) avec ses lumières d'échappement des gaz (18).
- une bague "amont" de réglage (19) déterminant l'abscisse du début de l'échappement des gaz,
- une bague "aval" de réglage (20) déterminant la surface d'échappement des gaz.
- une butée réglable d'arrêt (21) du piston de poussée (22) qui appuie sur la tête de poussée (7) du chariot.
- un récupérateur des gaz éjectés (23) et son conduit d'évacuation (24).

Selon l'invention, le piston de poussée (22) est préférentiellement en matériaux composites et plus particulièrement, en tissu de carbone imprégné de résine epoxyde.

Selon l'invention, le réglage de la bague "amont" de réglage (19), de la bague "aval" de réglage (20) et de la butée d'arrêt (21) du piston de poussée (22) est préférentiellement réalisé à l'aide de vérins (25) qui sont préférentiellement hydrauliques ou mus par un moteur électrique de type pas à pas. Les positionnements sont définis pa les calculs effectués par l'équipement informatique (10).

Sans sortir de l'invention, le dispositif banc pyrotechnique de réalisation d'accélération et de décélération à spectres simples ou complexes peut comporter des évents en plusieurs positions longitudinales.

Selon l'invention, les gaz sont créés par des générateurs de gaz pyrotechniques (15) qui sont préférentiellement constitués de (fig. 4):
- une enveloppe extérieure (26) préférentiellement en matière thermoplastique ou composite thermodurcissable. Dans sa ,partie supérieure, elle présente préférentiellement un logement central (27) recevant un allumeur (28).
- un diffuseur (29) préférentiellement en matière thermoplastique ou composite thermodurcissable présentant de hautes caractéristiques mécaniques et présentant une bonne résistance à l'érosion des gaz chauds. Ce diffuseur a pour but de maintenir la charge de propergol (30) pendant toute la durée de la combustion pour assurer la régularité et la reproductibilité des performances thermodynamiques du générateur.
- un couvercle (31) préférentiellement en matière thermoplastique ou composite thermodurcissable présentant, dans sa partie centrale, une zone fragilisée (32) à épaisseur contrôlée faisant office d'obturateur du col d'éjection des gaz.
- un allumeur de sécurité (28) préférentiellement électrique
- une charge de propergol préférentiellement constituée de grains de propergol (30).

Sans sortir de l'invention, cette charge de propergol peut être constituée d'un ou plusieurs blocs de propergol.

Selon l'invention, les allumeurs électriques des générateurs de gaz sont connectés au séquenceur d'allumage (11) qui a été programmé à l'aide de l'équipement informatique (10).

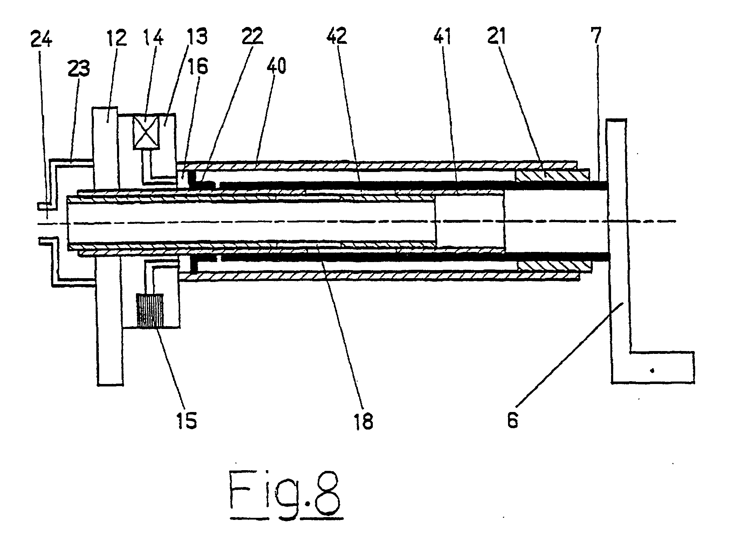

sans sortir de l'invention, d'autres constructions sont possibles, telles que celle présentée par la fig.8.

Cette construction dite à éjection centrale des gaz est préférentiellement constituée de :
- une platine de fixation (12)
- une culasse (13) comportant les logements (14) des générateurs de gaz pyrotechniques (15) et une chambre de détente initiale (16).
- un tube de lancement (40) placé extérieurement
- une bague médiane (41) présentant des évents ; elle est réglable longitudinalement pour assurer l'abscisse de début des évents.
- une bague interne (42) présentant les mêmes évents que (41) ; elle est réglable longitudinalement pour obtenir la surface désirée des évents.
- une bague de butée d'arrêt (21) du piston (22) réglable longitudinalement pour déterminer la course du piston. Le piston s'appuie sur la tête de poussée (7) du chariot (6).
- un récupérateur de gaz éjectés (23) et son conduit d'évacuation (24).

Selon l'invention, comme présentée par la figure 2, le système de freinage (9) est constitué d'un tambour (33), sur lequel est enroulé un câble (34) lié au chariot (6) par l'intermédiaire d'un amortisseur de mise en déroulement (35). Le tambour (33) est équipé d'un système de freinage (36) initié par un signal en provenance de l'équipement informatique (10).

Le chariot est remis en position initiale par enroulement du câble (34) sur le tambour (33).

Sans sortir de l'invention, le système de freinage commandé par l'équipement informatique (10) est placé sur les roues du chariot (6).

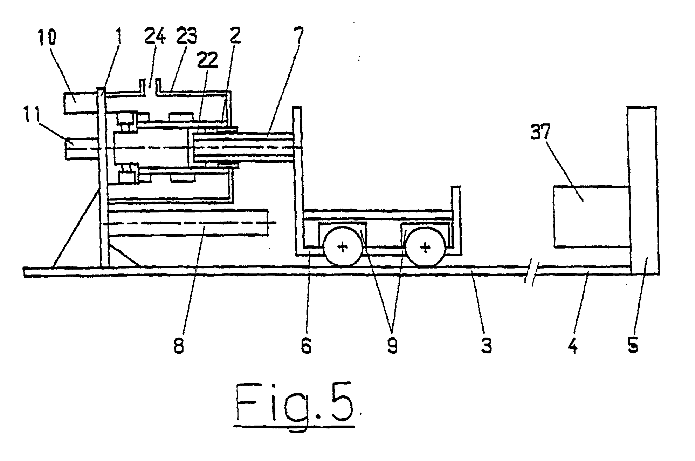

La figure 5 représente une construction préférentielle du dispositif de réalisation de décélération à spectres simples et complexes par action directe.

Selon l'invention, le banc est constitué préférentiellement de :
- un bâti (1) équipé du dispositif d'amortissement et d'absorbeur d'énergie de sécurité (8).
- un chemin de roulement (3) préférentiellement réalisé à l'aide de deux rails (4).
- un butoir support (5) du sous-ensemble de lancement (37).
- un chariot mobile (6) qui s'appuie en phase de décélération sur la tête de poussée (7) liée au piston (22).
- un équipement informatique (10) de simulation de fonctionnement du banc permettant de définir, grâce à un logiciel spécifique à l'invention, les réglages des évents d'évacuation des gaz, ainsi que les caractéristiques des générateurs de gaz pyrotechniques et leur séquence d'allumage.
- un séquenceur d'allumage (11).

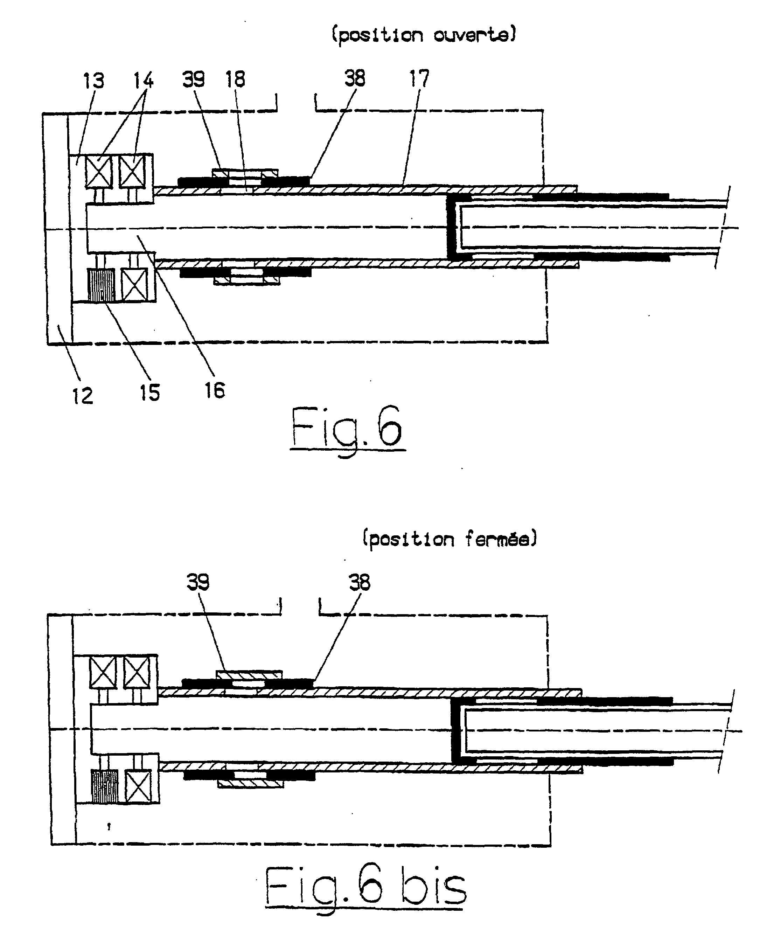

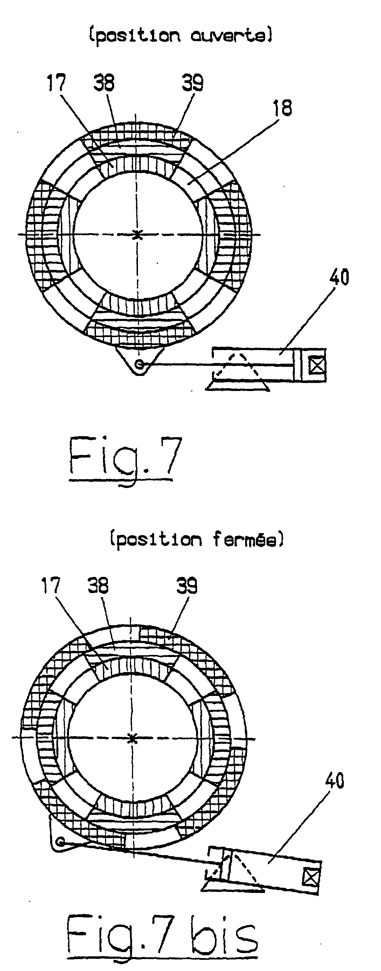

Selon l'invention, le dispositif d'amortissement est préférentiellement constitué, comme le présentent les figures 6 et 6 bis, de :
- une platine de fixation (12)
- une culasse (13) comportant les logements (14) des générateurs de gaz pyrotechniques (15) et une chambre de ,détente initiale (16).
- un tube d'amortissement (17) avec ses lumières d'échappement des gaz (18).
- une bague de réglage (38) déterminant la surface d'échappement des gaz.
- une bague de libération des évents (39) dont la rotation est assurée par un vérin pyrotechnique (40) (fig.7 et 7 bis).
- une butée (21) de piston (22) réglable longitudinalement à l'aide d'un vérin (25) préférentiellement hydraulique ou mu par un moteur électrique dit pas à pas. Cette butée permet le positionnement initial du piston, donc la course de l'amortissement. Selon l'invention, l'instant d'ouverture des évents a été calculé à l'aide du logiciel de l'équipement informatique (11). L'allumage du micro-générateur de gaz du vérin pyrotechnique (40) est initié par le séquenceur (11) ou par des capteurs de pression, de positionnement ou de sécurité.

Selon l'invention, le tube d'amortissement (17) peut être équipé de plusieurs bagues de libération des évents (39) ou d'une bague, à plusieurs positions, réalisée à l'aide de plusieurs vérins pyrotechniques ; ceci permet de réaliser plusieurs baisses de pression et donc de dégressivité de la décélération.

sans sortir de l'invention, ces évents pilotables par bagues rotatives actionnées par vérins pyrotechniques programmables, peuvent équiper le dispositif de réalisation d'accélération et de décélération présenté sur la figure 2, et ce en remplacement de l'ensemble des bagues "amont" et "aval" et de leurs vérins respectifs.

## Revendications

1. Dispositif de réalisation d'accélération et de décélération à spectres simples ou complexes, comprenant un lanceur (2) d'équipement mobile (6), **caractérisé en ce que** la pression internes dudit lanceur (2) est modulée par l'allumage programmé de générateurs de gaz pyrotechniques (15) et par l'ouverture d'évents (18) d'éjection des gaz, dont les surfaces et les positions sont réglables.

2. Dispositif selon la revendication 1, **caractérisé en ce qu'**il comprend un tube de lancement (17) équipé d'évents (18) d'éjection des gaz, dont le réglage de la position et de la surface des évents (18) est réalisé par une bague "amont" (19) et par une bague "aval" (20) extérieure au tube de lancement.

3. Dispositif selon la revendication 1, **caractérisé en ce qu'**il comprend un tube lanceur (40) et que l'équipement mobile comprend une tête de poussée sur laquelle s'appuie un piston, l'éjection des gaz se faisant par l'intérieur du tube lanceur (40) par des évents (18), dont les positions et les surfaces sont délimitées à l'aide du coulissement longitudinal de deux bagues (41) et (42) intérieures au piston et à la tête de poussée.

4. Dispositif selon l'une quelconque des revendications précédentes, **caractérisé en ce que** le piston (22) de poussée est bloqué en position finale de poussée par une bague de butée mobile d'arrêt de poussée (21).

5. Dispositif selon l'une . quelconque des revendications précédentes, **caractérisé en ce que** les bagues sont positionnées à l'aide de vérins (25) hydrauliques ou à moteurs électriques pas à pas.

6. Dispositif de réalisation de décélération à spectres simples ou complexes, comprenant un amortisseur d'équipement mobile (6), **caractérisé en ce que** la pression interne dudit amortisseur est modulée par l'allumage programmé de générateurs (15) de gaz pyrotechniques et par l'ouverture programmée d'évents (18) d'éjection des gaz dont les surfaces sont réglables.

7. Dispositif selon la revendication 1 ou 2, **caractérisé en ce que** les évents (18) sont ouverts par la rotation de une ou plusieurs bagues (39) actionnées par un ou plusieurs vérins pyrotechniques (48).

8. Dispositif selon l'une quelconque des revendications précédentes, **caractérisé en ce que** les générateurs de gaz pyrotechniques (15) allumés par un séquenceur programmé sont réalisés en matériaux thermoplastiques ou composites et comportent un allumage électrique (28) et un diffuseur (29) de régulation pyrotechnique.

## Patentansprüche

1. Vorrichtung für die Durchführung von Beschleunigungen und Verlangsamungen mit einfachen oder komplexen Spektren mit einer Starteinrichtung (2) für ein fahrbares Gerät (6), **dadurch gekennzeichnet, dass** der Innendruck der Starteinrichtung (2) durch die programmierte Zündung von pyrotechnischen Gasgeneratoren (15) und durch das Öffnen von Gasausstoßlöchern (18), deren Flächen und Positionen verstellbar sind, moduliert wird.

2. Vorrichtung nach Anspruch 1, **dadurch gekennzeichnet, dass** sie ein Startrohr (17) mit Gasausstoßlöchern (18) besitzt, wobei die Positionsund Flächenregulierung der Löcher (18) durch einen vorgelagerten Ring (19) und durch einen nachgelagerten Ring (20) außerhalb des Startrohres erfolgt.

3. Vorrichtung nach Anspruch 1, **dadurch gekennzeichnet, dass** sie ein Startrohr (40) umfasst und dass das fahrbare Gerät einen Schubkopf besitzt, an dem ein Kolben aufdrückt, wobei der Ausstoß der Gase über das Innere des Startrohres (40) durch Löcher (18) erfolgt, deren Positionen und Flächen mit Hilfe der Längsverschiebung von zwei Ringen (41 und 42) innerhalb des Kolbens und des Schubkopfs begrenzt werden.

4. Vorrichtung nach einem der vorhergehenden Ansprüche, **dadurch gekennzeichnet, dass** der Schubkolben (22) in der Schubendstellung durch einen beweglichen Antriebschluss-Stellring (21) blockiert wird.

5. Vorrichtung nach einem der vorhergehenden Ansprüche, **dadurch gekennzeichnet, dass** die Ringe mit Hilfe von hydraulischen oder durch elektrische Schrittmotoren betätigten Zylindern (25) in Stellung gebracht werden.

6. Vorrichtung für die Durchführung von Verlangsamungen mit einfachen oder komplexen Spektren mit einer Dämpfeinrichtung für ein fahrbares Gerät (6), **dadurch gekennzeichnet, dass** der Innendruck der Dämpfeinrichtung durch die programmierte Zündung von pyrotechnischen Gasgeneratoren (15) und durch das programmierte Öffnen von Gasausstoßlöchern (18), deren Flächen verstellbar sind, moduliert wird.

7. Vorrichtung nach Anspruch 1 oder 2, **dadurch gekennzeichnet, dass** die Löcher (18) durch das Drehen eines oder mehrerer Ringe (39) geöffnet werden, die von einem oder mehreren pyrotechnischen Zylindern (48) betätigt werden.

8. Vorrichtung nach einem der vorhergehenden Ansprüche, **dadurch gekennzeichnet, dass** die pyrotechnischen Gasgeneratoren (15), die durch einen programmierten Befehlgeber gezündet werden, aus thermoplastischem oder Verbundmaterial bestehen und eine elektrische Zündung (28) sowie einen Diffusor (29) für die pyrotechnische Regulierung umfassen.

## Claims

1. Device for producing simple or complex spectrum acceleration and deceleration comprising a launcher (2) for mobile equipment (6), **characterised in that** the pressure inside said launcher (2) is varied by programmed ignition of pyrotechnic gas generators (15) and by opening gas ejector vents (18) having adjustable surface areas and positions.

2. Device as claimed in claim 1, **characterised in that** it comprises a launch tube (17) equipped with gas ejector vents (18), the position and surface area of the vents (18) being adjusted by an "upstream" ring (19) and by a "downstream" ring (20) outside the launch tube.

3. Device as claimed in claim 1, **characterised in that** it comprises a launch tube (40) and **in that** the mobile equipment comprises a thrust head against which a piston pushes, the gases being ejected through the inside of the launch tube (40) via vents (18), the positions and surface areas of which are delineated by longitudinally sliding two rings (41) and (42) inside the piston and the thrust head.

4. Device as claimed in any of the above claims, **characterised in that** the thrust piston (22) is locked in its final thrust position by a moving thrust limit stop ring (21).

5. Device as claimed in any of the above claims **characterised in that** the rings are positioned by means of hydraulic rams (25) or rams (25) operated by electric stepper motors.

6. Device for producing simple or complex spectrum deceleration comprising a mobile equipment damper (6), **characterised in that** the internal pressure of said damper is varied by programmed ignition of pyrotechnic gas generators (15) and by the programmed opening of gas ejector vents (18) whose surface areas are adjustable.

7. Device as claimed in claim 1 or 2, **characterised in that** the vents (18) are opened by rotating one or more rings (39) actuated by one or more pyrotechnic rams (48).

8. Device as claimed in any of the above claims **characterised in that** the pyrotechnic gas generators (15) ignited by a programmed sequencer are made of thermoplastic or composite materials and include an electric igniter (28) and a pyrotechnic control diffuser (29).
